# EUROPEAN PATENT APPLICATION

(11) **EP 4 525 474 A1**
(43) Date of publication of application: **19.03.2025**
(21) Application number: 24200068.5
(22) Date of filing: 12.09.2024
(51) Int. Cl.: H04N 23/63, H04N 23/62, H04N 5/262, H04N 23/80

(54) **VIDEO CAPTURE**

(30) Priority: 12.09.2023 SG 10202302563U
(71) Applicant: Blackmagic Design Pty Ltd, South Melbourne, Victoria 3205 (AU)
(72) Inventor: PETTY, Grant, South Melbourne, 3205 (AU); GUPTA, Rohit, South Melbourne, 3205 (AU); MU, Su, South Melbourne, 3205 (AU)
(74) Representative: Mathys & Squire

(57) **Abstract**

The present disclosure relates to video capture with a portable computing device. A method of operating a portable computing device, a portable computing device and graphical user interface used while capturing a video is also disclosed. Embodiments include generating a video feed for display in landscape mode in a viewing window.

## Description

### Field

The present disclosure relates to video capture with a portable computing device. A method of operating a portable computing device while capturing a video is also disclosed. In some forms the method can be embodied as instructions that cause a portable computing device to operate according to such a method, or a portable computing device configured to implement such a method.

### Background

Smartphones are commonly used to capture video and photographs. With the general increase in the quality of images captured on smartphones, provided, inter alia, by increased pixel count of cameras in smartphones; and the ubiquity and relatively low cost of smartphones, videos shot on smartphones are finding more uses in applications where high quality videos or images are desirable, such as movie making, news and media reporting, journalism or broadcast media etc.

In the present specification the terms "shot", "video", "movie", "film", "footage", "clip" are used interchangeably to mean a digital video comprising a sequence of at least two digital images or frames.

Digital images, videos, image sensors, displays and the like, are able to be described in terms of "pixels". As one skilled in the art will appreciate, what constitutes a "pixel" in each context is technically different e.g. it may be data representing light intensity and optionally colour, a light receiver, a light emitter etc.). Pixels will typically be arranged in an array that is rectangular in shape. Such a rectangular array can be described as having dimensions of N pixels x M pixels, where N is not equal to M. Thus the rectangular array will have one "long" dimension that has more pixels than in the other "short" dimension. In the specification when a device, device component (e.g. image sensor or display), image or video is described as having an "orientation" or similar concept, unless the context dictates otherwise, the orientation will be named by whether the long dimension of the image, image capture device, or display device (when counted in pixels) lies in its height or width direction.

The convention to call such orientations of "landscape", "portrait", "horizontal", "vertical", "high" or "wide" and variations thereof, are chosen for ease of reference and understanding to a person of skill in the art, not to limit subject matter of images, or the actual orientation of the device, component, or image.

"Portrait orientation", "Portrait" or "vertical" in relation to an image or video, refers to an image or video that is higher than it is wide i.e. its long dimension is in the height direction. "Portrait orientation", "Portrait" or "vertical" in relation to a camera is intended to refer to an orientation or arrangement of the camera in which the image sensor or sensors of the camera will natively capture an image or video that is higher than it is wide i.e. an orientation in which the sensor or sensors have more pixels in the height dimension than the width dimension. A conventional camera that is in portrait orientation will therefore capture an image or video in Portrait. "Portrait orientation", "Portrait" or "vertical" in relation to a physical display or a viewing window of a user interface is intended to refer to an orientation or arrangement of the physical display or a viewing window which is higher than it is wide i.e. an orientation in which the physical display or a viewing window has its long dimension in the height direction.

"Landscape orientation", "Landscape" or "horizontal" in relation to an image or video, refers to an image or video that is wider than it is high i.e. its long dimension is in the width direction. "Landscape orientation", "Landscape" or "horizontal" in relation to a camera is intended to refer to an orientation or arrangement of the camera in which the image sensor or sensors of the camera will natively capture an image or video that is wider than it is high i.e. an orientation in which the sensor or sensors have more pixels in the width dimension than the height dimension. A conventional camera that is in landscape orientation will therefore capture an image or video in landscape. "Landscape orientation", "Landscape" or "horizontal" in relation to a physical display or a viewing window of a user interface is intended to refer to an orientation or arrangement of the physical display or a viewing window which is wider than it is high i.e. an orientation in which the physical display or a viewing window has more pixels in the width dimension than the height dimension. For example a conventional television screen is conventionally watched in Landscape.

The systems, devices, methods and approaches described in the specification, and components thereof are known to the inventors. Therefore, unless otherwise indicated, it should not be assumed that any of such systems, devices, methods, approaches or their components described are citable as prior art merely by virtue of their inclusion in the background or other parts of the specification, or that such systems, devices, methods, approaches and components would ordinarily be known to a person of ordinary skill in the art.

### Summary

Aspects and embodiments of the present invention are set out in the appended claims. These and other aspects and embodiments of the invention are also described herein.

The present disclosure relates to video capture with a portable computing device. A method of operating a portable computing device, a portable computing device and graphical user interface used while capturing a video is also disclosed. Embodiments include generating a video feed for display in landscape mode in a viewing window.

In a first aspect there is provided a portable computing device. The portable computing device may comprise a display on a first side of the portable computing device, the display having a long dimension and a short dimension, and at least one camera with a field of view facing backward from the back face of the camera. The at least one camera with a field of view facing backward from the back face of the camera, the at least one camera may have at least one image sensor arranged to capture video with substantially rectangular video frames having a second long dimension and a second short dimension. The at least one camera and the display may share a common orientation, such that the first long dimension and second long dimension are aligned. The portable computing device also includes one or more processors; a memory; and one or more programs, wherein the one or more programs are stored in the memory and are configured to be executed by the one or more processors, to cause the portable computing device to, display a first video feed from the at least one camera on the display in landscape orientation when said at least one camera and display are in landscape orientation, and display a second video feed from the at least one camera on the display in landscape orientation, when said at least one camera and display are in portrait orientation.

Displaying a second video feed from the at least one camera on the display in landscape orientation, when said at least one camera and display are in portrait orientation may comprise: capturing video in portrait orientation; and displaying a portion of the captured video in a viewing window of a graphical user interface, said viewing window being in landscape orientation when said display is in portrait orientation, to display said second video feed from the camera on the display in landscape orientation.

The portable computing device can have a third long dimension and a third short dimension when the portable computing device is viewed from a direction normal to the display, wherein the third long dimension is aligned with the first and second long dimensions.

The viewing window of the graphical user interface may have a fourth long dimension and a fourth short dimension, wherein the long dimension of the viewing window is aligned with the second short dimension.

The portion of the captured video that is displayed in the viewing window as the second video feed may include substantially the whole extent of the frames of the captured video across the second short dimension. The portion of the captured video that is displayed in the viewing window as the second video feed may include part of the frames of the captured video along the second long dimension.

The one or more programs cause the portable computing device to determine whether said display is in landscape or portrait orientation. The portable computing device can include one or more sensors configured to indicate orientation data from which to determine whether said display is in landscape or portrait orientation.

The portable computing device may be configured to capture portrait orientation video when the camera is in portrait orientation; and discard an unviewed portion of the captured video that is not included in the second video feed.

In some embodiments the portable computing device can be configured to capture portrait orientation video when the camera is in portrait orientation; and display a horizontal band of the captured portrait orientation video such that the band is wider than it is high, thus displaying said second video feed from the at least one camera on the display in landscape orientation.

The portable computing device may be configured to receive a user input to record a video and, in response to said user input, save a landscape video into memory corresponding to the second video feed, when said at least one camera and display are in portrait orientation. The portable computing device may be configured to receive a user input to terminate recording of a video.

In some embodiments the landscape video may be stored: at the resolution of the second video feed; or at a user selected resolution different to the resolution of the second video feed; or at a full resolution captured by the at least one camera's at least one image sensor.

The at least one camera may be further configured to store a proxy of said landscape video.

The portable computing device may be a smartphone.

In a further aspect there is provided a method performed by a portable computing device, comprising: displaying a first video feed from at least one camera of the portable computing device in landscape orientation on a display of the portable computing device when said at least one camera and display are in landscape orientation, displaying a second video feed from said at least one camera on the display in landscape orientation, when said at least one camera and display are in portrait orientation.

Displaying a second video feed from the at least one camera on the display in landscape orientation, when said at least one camera and display are in portrait orientation can comprise: capturing video in portrait orientation; displaying a portion of the captured video in a viewing window of a graphical user interface, said viewing window being in landscape orientation when said display is in portrait orientation, to display said second video feed from the camera on the display in landscape orientation.

The method may further comprise determining whether said display is in landscape or portrait orientation.

The method may further comprise capturing portrait orientation video when the camera is in portrait orientation; and discarding an unviewed portion of the captured video that is not included in the second video feed.

The method may further comprise receiving a user input to record a video; and, in response to said user input, saving a landscape video into memory corresponding to the second video feed, when said at least one camera and display are in portrait orientation.

The landscape video may be stored: at a resolution of the second video feed; at a user selected resolution different to the resolution of the second video feed, or a full resolution captured by the at least one camera's at least one image sensor.

The method may further comprise generating a proxy of said landscape video. The proxy may be stored. The proxy may be transmitted to a second device for storage and use in editing or other post-production activity, such as colour grading or the like.

The method may be executed on a smartphone. The smart phone can comprise a display, at least one camera with a field of view facing backward from the back face of the camera, the at least one camera having at least one image sensor arranged to capture video with substantially rectangular video frames having a second long dimension and a second short dimension; wherein the at least one camera and the display share a common orientation, such that the first long dimension and second long dimension are aligned; one or more processors; a memory; and one or more programs, wherein the one or more programs are stored in the memory and are configured to be executed by the one or more processors, to cause the portable computing device to perform an embodiment of the above method.

In a further aspect the present disclosure provides a graphical user interface for a portable computing device, the graphical user interface operating in: a first mode wherein the graphical user interface is configured to display a first video feed from at least one camera of the portable computing device in a viewing window on the display, in landscape orientation, when said at least one camera and display are in landscape orientation; and in a second mode wherein the graphical user interface is configured to display a second video feed from the at least one camera of the portable computing device in a viewing window on the display in landscape orientation, when said at least one camera and display are in portrait orientation.

The graphical user interface (GUI) may further display a button, that may be touched by a user to provide a user input to the portable computing device to begin recording a video shown in the viewing window. While file recording is in progress the GUI may display a button, that may be touched by a user to provide a user input to the portable computing device to stop recording the video that is shown in the viewing window. This may be a second mode of operation of the button that activated recording.

A smartphone including such a graphical user interface forms yet another aspect of the present disclosure.

A further aspect the present disclosure provides a non-transitory computer readable storage medium storing one or more programs, the one or more programs comprising instructions, which, when executed by a portable electronic device with a display and one or more cameras, cause the electronic device to perform a method according to an aspect of the present disclosure.

In embodiments of the above aspects a portable electronic device may be a smartphone, e.g., an Apple iPhone, or smart phone from another manufacturer running the Android operating system. In another embodiment a portable electronic device may be a tablet computer, handheld gaming unit or other similar handheld electronic device.

Yet a further aspect of the invention provides a method performed by a portable computing device comprising a display, the method comprising: capturing, by at least one camera of the portable computing device, a video; in accordance with a determination that said portable computing device or the display is in a landscape orientation, displaying a first video feed from the captured video in landscape orientation on a graphical user interface of the device; and in accordance with a determination that said portable computing device or the display is in a portrait orientation, generating a second video feed in landscape orientation from the captured video.

The method may further comprise displaying the second video feed in landscape orientation from the captured video on the graphical user interface of the portable computing device.

While the invention(s) disclosed herein are amenable to various modifications and alternative forms, specific embodiments are shown by way of example in the drawings and are described in detail. It should be understood, however, that the drawings and detailed description are not intended to limit the invention(s) to the particular form disclosed. Furthermore, all alternative combinations of two or more of the individual features mentioned or evident from the text or drawings comprise additional aspects or inventive disclosures, which may form the subject of claims.

The disclosure also provides computer programs and computer program products comprising software code adapted, when executed on a data processing apparatus, to perform any of the methods and/or for embodying any of the apparatus and system features described herein, including any or all of the component steps of any method.

The disclosure also provides a computer or computing system (including networked or distributed systems) having an operating system which supports a computer program for carrying out any of the methods described herein and/or for embodying any of the apparatus or system features described herein.

The disclosure also provides a computer readable media having stored thereon any one or more of the computer programs aforesaid.

The disclosure extends to methods, system and apparatus substantially as herein described and/or as illustrated with reference to the accompanying figures.

The disclosure also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the disclosure may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

It should also be appreciated that particular combinations of the various features described and defined in any aspects of the disclosure can be implemented and/or supplied and/or used independently.

### Brief description of the Drawings

Figure 1 is a schematic block diagram of a first embodiment of a portable device.
Figure 2 shows a front and rear view of a portable electronic device in the form of a smartphone.
Figures 3A and 3B show a conventional camera operation graphical user interface enabling inter alia, view finding and video recording.
Figure 4 show a graphical user interface according to an embodiment of the present disclosure in landscape orientation enabling inter alia, view finding and video recording.
Figures 5 show a graphical user interface according to an embodiment of the present disclosure in portrait orientation enabling inter alia, view finding and video recording.
Figure 6 illustrates the process of generating a first video feed and a second video feed according to an embodiment.
Figures 7 to 9 are flowcharts illustrating an overview of several methods that may be performed in embodiments of the present disclosure.

### Detailed description

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obfuscation of salient details.

Many smartphones have a capability to generate panoramic images and are able to generate landscape images with the smartphone held in portrait orientation. This is done by stitching together multiple images or parts of images which have been captured as the camera is panned across a scene. However, it is not possible or feasible to make videos in such a fashion as each frame of such a video would require the same panning and stitching process.

The inventor(s) have noted that in in some instances it is advantageous to generate videos with a portable computing device in a given (portrait or landscape) orientation, even though the portable computing device is arranged in the other orientation (landscape or portrait respectively).

One embodiment comprises a method of operating a portable device having a camera which captures a video in portrait orientation, wherein the portable device stores a landscape orientation video that comprises frames that are a portion of frames of said video captured in portrait mode. In some embodiments thereof the remainder of the frames of the video captured in portrait mode that are not part of said portion are not stored.

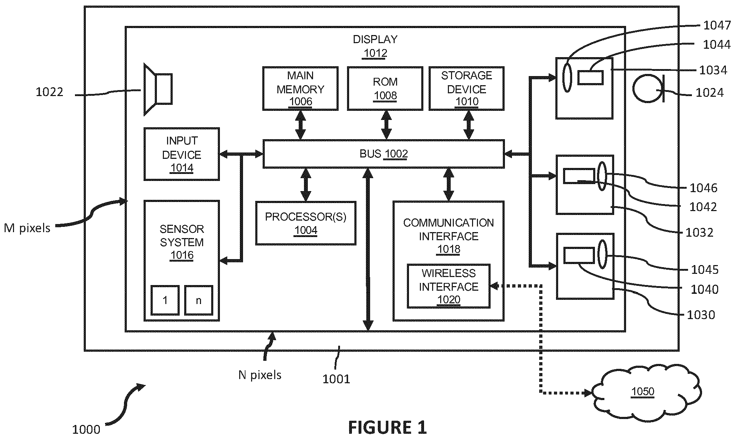

Figure 1 provides a block diagram that illustrates one example of portable device 1000 able to implement an embodiment of the present disclosure. The portable device 1000 may be a smartphone, tablet computer, handheld gaming unit or similar device. Device 1000 includes a bus 1002 or other communication mechanism for communicating information, and a hardware processor 1004 coupled with bus 1002 for processing information. Hardware processor 1004 may be, for example, one or more general-purpose microprocessors, one or more graphics processing units, or other type of processing unit, or combinations thereof.

Device 1000 also includes a main memory 1006, such as a random access memory (RAM) or other dynamic storage device, coupled to bus 1002 for storing information and instructions to be executed by processor 1004. Main memory 1006 also may be used for storing temporary variables or other intermediate information during execution of instructions to be executed by processor 1004. Such instructions, when stored in non-transitory storage media accessible to processor 1004, render device 1000 into a special-purpose machine that is customized and configured to perform the operations specified in the instructions.

Device 1000 may further include a read only memory (ROM) 1008 or other static storage device coupled to bus 1002 for storing static information and instructions for processor 1004. A storage device 1010, comprising storage media such as a solid state disk, flash memory or magnetic disk may be provided and coupled to bus 1002 for storing information and instructions including the colour correction application and/or image and video data that may be subject to colour correction.

The device 1000 includes a display 1012 (such as one or more LCD, LED, OLED, touch screen displays, or other display) that may be coupled via bus 1002 for displaying information to a user. As illustrated in figure 1 the display 1012 is rectangular in shape and has N pixels horizontally and M pixels vertically, where N is not equal to M. Thus the rectangular array of pixels has one "long" dimension (the N dimension in this case) that has more pixels than in the other "short" dimension (the M dimension in this case). When the device 1000 is used in the orientation illustrated, the width of the display is larger than the height of the display and thus the display can be considered to be in landscape orientation. Rotation of the device 1000 by 90 degrees would put the display 1012 in a portrait orientation as its height would be larger than its width. It can also be observed that the device 1000 has a housing 1001 that is generally shaped in a similar manner to the display, such that the housing's long dimension and short dimension are aligned with those of the display 1012. Thus it is convenient to consider the device 1000 *per se* to have portrait and landscape orientations that align with those of display 1012.

The device 1000 may also include one or more input devices 1014. The input devices 1014 may be provided to permit a user to interact or interface with device 1000. For example, input device 1014 can include, but is not limited to, a touch pad, switch, knob, slider, scroll wheel, touch screen, one or more buttons (e.g., a keyboard), joy stick, track ball. Each input device 1014 may be coupled to the bus 1002 for communicating information and command selections to processor 1004 to provide one or more control functions for making selections or issuing commands associated with operating device 1000. In one form, the display 1012 is a touch screen display capable of sensing multiple simultaneous touches, and thus also operates as an input device in combination with an associated graphical user interface.

The device 1000 may also include a sensor system 1016 comprising one or more sensors or receivers (i..n), e.g., environmental sensors, tilt sensor, accelerometers, gyroscopes, global navigation satellite system (GNSS) antenna/receiver (e.g., GPS receiver) for communicating information about the device, user or environment to processor 1004.

Electronic device 1000 may also include one or more audio components that present or receive audio information in the form of sound, electrical signals or data representing sound. The audio components may be connected to the bus 1002 through appropriate circuitry or processing systems, e.g., sound cards, DAC or ADC stages as necessary. Examples of audio components include, but are not limited to, audio speakers (1022), audio jack, audio line-out, buzzer, microphone (1024), or combinations thereof.

The device 100 also includes one or more cameras 1030, 1032, 1034. Each of the cameras 1030, 1032, 1034 includes at least one image sensor 1040, 1042, 1044 and an optical system 1045, 1046, 1047 respectively. The optical systems 1045, 1046, 1047 may include one or more suitable lenses, optical filters, mirrors or other optical elements, operative to capture light from the surrounding environment of electronic device 100 and direct it to the respective image senor(s) 1040, 1042, 1044. Image sensor(s) 1040, 1042, 1044 optionally include one or more charge-coupled device (CCD), complementary metal-oxide semiconductor (CMOS) phototransistors or optical sensor of any other suitable type, and operate to receive light from the environment, projected through its respective optical system 1045, 1046, 1047, and to convert the received light into image data representing an image.

The device 1000 includes two back-facing cameras 1030, 1032, and one front facing camera 1034. A front facing camera 1034 is arranged to capture images from the side of the device 1000 from, which the display is viewed, as such the front facing camera 1034 may be particularly convenient for a user for in capturing images of themselves while viewing the display 1012. e.g., when video conferencing, taking a "selfie" etc. The back facing cameras 1030, 1032 point away from the user when they are viewing the display 1012. The two back-facing cameras 1030, 1032 may be different to each other, e.g., they possess different optical systems, different sensors, different geometry or a combination thereof, so that the cameras have different imaging characteristics. This allows the camera with the most appropriate imaging characteristics to be selected when taking a particular image or allows imaging of the same (or similar) scene in parallel by both cameras.

The image sensor(s) 1040, 1042, 1044 of each camera 1030, 1032, 1034 generate digital images of a given size, which may be represented by the number of pixels in each of a horizontal and vertical direction. Thus each of image sensor(s) 1040, 1042, 1044, and images generated thereby, can be considered to have an orientation, which may be described as either "portrait" or "landscape" as defined above. Note that if a camera has multiple sensors the relevant orientation is then defined by the orientation of the overall sensor arrangement and its corresponding resultant image, which may be the same or different to that of one or more of the sensors within the arrangement. The orientation of the sensor(s) of a camera will therefore define the orientation of the camera. Each camera 1030, 1032, 1034 may generate images of the same or different size or dimensions.

At least one of the back-facing cameras 1030, 1032 is physically arranged with respect to the display such that an orientation of the camera matches that of the display 1012. This facilitates using the display 1012 as a viewfinder for the camera (for either or both cameras 1030, 1032) as the orientations of the display 1012 and camera (for either or both cameras 1030, 1032) match thus allowing a relatively large image to be used for viewfinding.

According to at least one embodiment, the techniques herein are performed by device 1000 in response to processor 1004 executing one or more sequences of one or more instructions contained in main memory 1006. Such instructions may be read into main memory 1006 from another storage medium, such as a remote database. Execution of the sequences of instructions contained in main memory 1006 causes processor 1004 to perform the process steps described herein. In alternative embodiments, hard-wired circuitry may be used in place of, or in combination with, software instructions. The storage medium may also be used to store images or video files on which colour correction may be performed.

The terms "storage media" or "storage medium" as used herein refers to any non-transitory media that stores data and/or instructions that cause a machine to operate in a specific fashion. Such storage media may comprise non-volatile media and/or volatile media. Non-volatile media includes, for example, optical or magnetic disks, such as storage device 1010. Volatile media includes dynamic memory, such as main memory 1006. Common forms of storage media include, for example, a floppy disk, hard disk drive, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge. Storage media may be local, in the sense it is connected to the bus 1002 or remote, in so far as it is communicatively coupled to the device 1000 via a network connection. In this regard, device 1000 may also include a communication interface 1018 coupled to bus 1002.

Communication interface 1018 provides a two-way data communication coupling to a communication network 1050 or another device. For example, communication interface 1018 may include one or more wired networking interfaces e.g., a USB interface, thunderbolt interface, ethernet interface, cable modem, ISDN card, and one or more wireless communications interface, e.g., Bluetooth interface, WLAN interface (e.g. IEEE 802.11x ) satellite communication interface, cellular communication interface. In the present example, the communication interface 1018 includes a broadband cellular interface 1020. The cellular interface 1020 may operate according to any cellular communications methodology such as 4G, 5G or future standards.

In any such implementation, communication interface 1018 sends and receives electrical, electromagnetic or optical signals that carry digital data streams representing various types of information.

The device 1000 also includes a power supply (not illustrated for simplicity) that provides power to the components of device 1000. The power supply may include one or more batteries for providing power, but may be able to be coupled to an external power source, e.g., via a charging cable, or network connection (e.g., USB) to allow charging or running directly from external power.

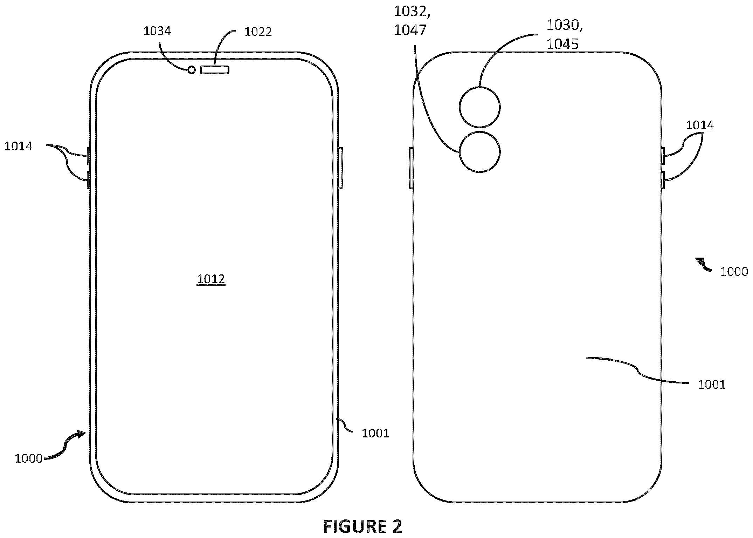

Figure 2 illustrates a further example of a device 1000 in the form of a smartphone. The device 1000 is shown from the front (left side) and rear (right side). The front view shows the display 1012 which covers almost the full front face of the device 1000, save for a bezel that forms part of the portable computing device's housing 1001 and surrounds the display 1012. The front view also shows an aperture or window through which the camera 1034 can take front-facing images, and an opening for a speaker 1022. The device includes input devices in the form of several buttons 1014. The rear view shows the position of the lenses 1045 and 1047 of two back-facing cameras 1030, 1032, respectively.

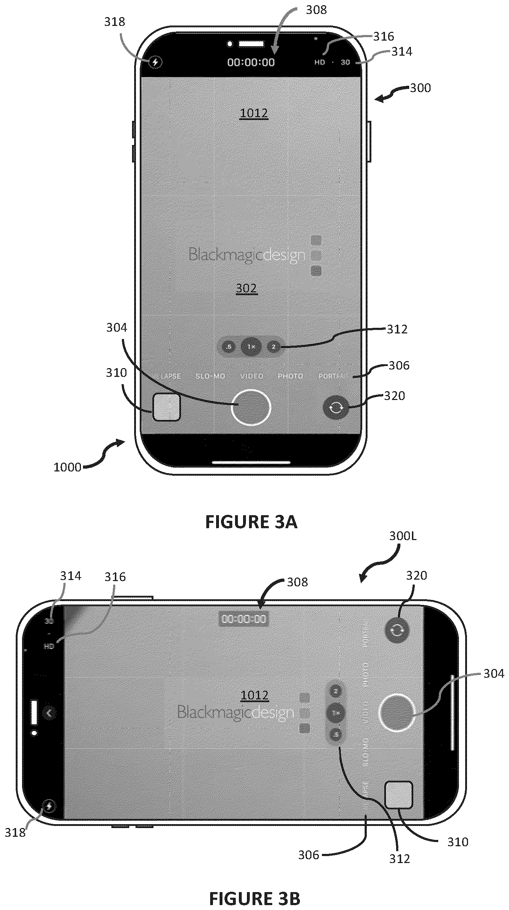

Figure 3A illustrates the same device 1000 as figure 2 in portrait orientation showing a graphical user interface (GUI) 300, used by a user to operate and interact with the cameras 1030, 1032, 1034 of the device 1000. The GUI 300 includes a main viewing window 302. The viewing window 302 has a long dimension that aligns with the long dimension of the display 1012 and the device itself 1000, and so is in portrait orientation. The viewing window 302 displays a video feed from the camera and operates as a viewfinder for a user of the camera, and allows them to see the scene that is being captured by the camera.

The GUI also includes a software defined button 304 that is touched by a user to provide a user input to the device to begin recording a video (and also to stop recording a video). A capture mode menu 306 is provided to allow a user to select different modes in which the camera(s) may operate. In this case "video" is selected. The current clip recording time 308 is also shown at the top of the GUI 300 As device 1000 in figure 3A and 3B is not recording the timer is at 00:00:00. The GUI 300 also provides a viewing box 310 that shows a thumbnail of the last captured video/photo so that a user may look at that clip/image e.g., in a viewing software or separate viewing interface. The GUI 300 also shows the following capture parameters - zoom level 312, frame rate 314, capture resolution 316, flash or lighting status 318. The GUI 300 also has a camera selection button 320 that allows a user to select to use the forward facing camera 1034 or backward facing cameras 1030, 1032.

When the device 1000 is rotated by a user the sensor system 1016 may sense this, e.g., using a tilt sensor(s) or accelerometer(s), gyroscope(s) or the like, and send a signal to the processor system 1004 to indicate that the device is now in a different orientation. In response to this, the program may modify the GUI to change its layout accordingly. Figure 3B shows the same device 1000 and GUI 300L in its landscape mode. Graphical user interface 300L is much the same as the GUI in Figure 3A, with the exception of the arrangement of some GUI elements to accommodate the different layout of the viewing window 302. The primary difference is that the viewing window 302 is now wider than it is high i.e., its long dimension is horizontal. As with portrait mode, the viewing window orientation of the GUI 300 matches the orientation of the cameras 1030, 1032 and device 1000 in general. Elements in the landscape mode of the GUI 300L that perform the same function as in the portrait mode of the GUI 300 share common reference numerals and are not described again for brevity.

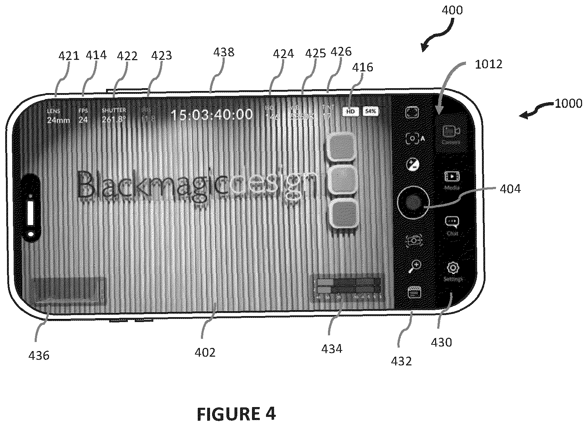

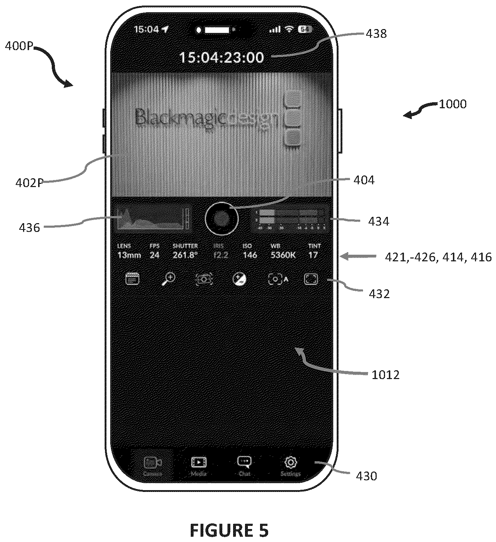

Figure 4 illustrates a device 1000 configured to have an embodiment of a GUI according to an aspect of the present disclosure. Figure 5 illustrates a second mode of operation of the same GUI as discussed below.

In Figure 4, the device 1000 is illustrated in landscape orientation such that the longest dimension of the device is horizontal, and its short dimension is vertical. The overall look of the GUI 400 is similar to that of Figure 3B in that it has a landscape orientation viewing window 402 that takes up the majority of the area of the display 1012, video record button 404, frame rate indication 414, resolution indicator 416. The viewing window 402 displays a video feed from the camera and operates as a viewfinder for a user of the camera, and allows them to see the scene that is being captured by the camera. The GUI 400 also includes series of indicators 421 to 426 showing a range of image capture parameters that currently apply to the camera (lens focal distance 421, shutter angle 422, iris 423, ISO 424, white balance temperature 425 and tint 426). The GUI 400 also includes a series of buttons 430 in the form of icons that are selectable by a user touching the touch screen display 1012 to switch between functions of the application or adjust settings. A series of additional buttons 432 are provided, which when selected, activate a GUI element that allows adjustment or setting of additional camera parameters, such as autofocus mode, exposure, or the like.

Meters 434 are provided to allow a user to monitor the levels of audio being received by a microphone (e.g., 1024 or external microphone(s) connected to the device 1000). A colour content analysis display element 436 is also provided to allow the colour parameters of the scene to be visualised. In this example, element 436 shows a colour histogram of R, G and B content. Other GUI elements may be added or some removed to simplify the GUI appearance or operation. A timecode display 438 is also provided at the top of the GUI. The detailed functions of the components 421 to 438 will not be described herein in order to avoid obscuring relevant detail of other parts of the device and its operation.

Figure 5 illustrates the device 1000 showing the GUI in a second mode of operation. The device 1000 is illustrated in portrait orientation such that the longest dimension of the device is vertical, and its short dimension is horizontal. The GUI illustrated is an alternate mode of operation of the GUI of Figure 4 that is used when the device 1000 is in portrait orientation.

The overall look of the GUI 400P ("P" indicating portrait) is similar to that of Figure 4 and includes similar elements for conveying common information. The GIU 400P includes a video record button 404, frame rate indication 414, resolution indicator 416. The GUI 400P also includes a series of indicators 421 to 426 showing a range of image capture parameters that currently apply to the camera (lens focal distance 421, shutter angle 422, iris 423, ISO 424, white balance temperature 425 and tint 426). The GUI 400P also includes a series of buttons 430 that are selectable to switch between functions of the application or adjust settings. A series of additional buttons 432 are provided, which when selected, activate a GUI element that allows adjustment or setting of additional camera parameters, such as autofocus mode, exposure, or the like. Meters 434 are provided to allow a user to monitor the levels of audio being received by a microphone (e.g., 1024 or external microphone(s) connected to the device 1000). A colour content analysis display element 436 is also provided to allow the colour parameters of the scene to be visualised. Elements in the landscape mode of the GUI 400 that perform the same function as in the portrait mode of the GUI 400P share common reference numerals and are not described again for brevity.

GUI 400P also includes a viewing window 402P. However the viewing window 402P is no longer orientated in the same direction as the display 1012, device, or camera(s) 1030, 1032 which are all aligned with each other and are in portrait orientation. Instead, the viewing window 402P is in landscape orientation. The viewing window 402P displays a video feed from the active camera(s) and operates as a viewfinder for a user of the camera, and allows them to see the scene that is being captured by the camera. However, because of the orientation of the camera(s) is aligned with the display 1012 and typically the device housing more generally, the video feed's orientation does not match that of the viewing window 402P.

To address this issue embodiments of the present disclosure may generate a second video feed that is different to the video feed shown in the viewing window 402 of GUI 400 that is used when the device 1000 is in landscape orientation. The second video feed includes only a selected portion of the video frames captured by the camera(s) 1030, 1032 in portrait orientation. This selected portion has a shape that is in landscape orientation. In some embodiments the long dimension of the selected portion of the frames (i.e., it's width) that are included in the second video feed is the same as the short dimension of the frames captured by the camera. In some embodiments the displayable resolution of the viewing window 402P may not match that of the frames captured by the camera(s) so in such cases the displayed frames in the second video feed may be scaled up or down accordingly.

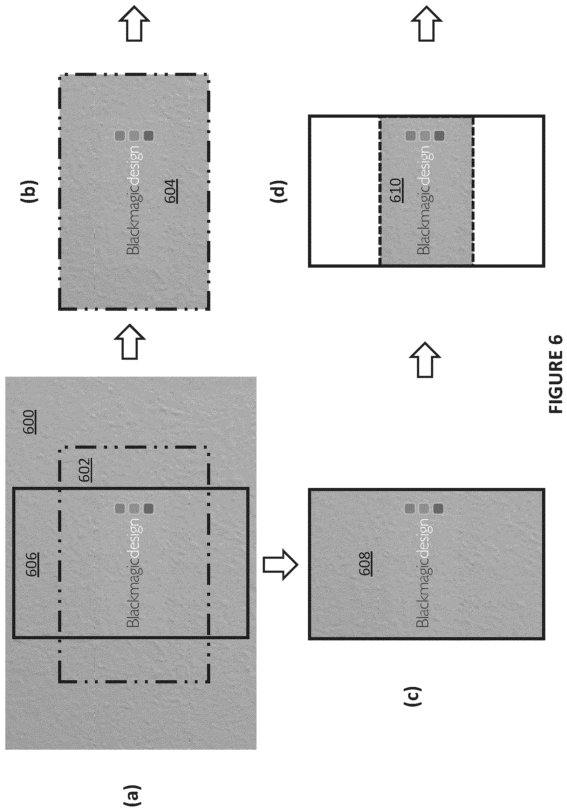

Figure 6 illustrates schematically the differences between the frames comprising the first and second video feeds and their relative sizes and extents.

Panel (a) illustrates a scene 600 able to be filmed by a device 1000 which is adapted to implement an embodiment of the present disclosure. When the device 1000 is in landscape orientation the field of view captured by a camera (e.g., 1030, 1032) is that portion of the scene bound by the dot-dash-dash box 602. Thus a frame of the video feed of the scene 600, as captured by the camera (e.g., 1030, 1032), and as displayed in the viewing window 402 of GUI 400 will resemble the image 604, shown in panel (b) bounded by the dot-dash-dash box.

When the device 1000 is in portrait orientation the field of view captured by a camera (e.g., 1030, 1032) is that portion of the scene bound by the solid box 606. However, the frame of the second video feed of the scene 600, as captured by the camera (e.g., 1030, 1032), and as displayed in the viewing window 402P of GUI 400P will not resemble the image 608, shown in panel (c) bounded by the solid box, because the viewing window 402P is in landscape orientation, not portrait orientation like image 608. Instead, only a portion of the image 608 is used in each frame of the second video feed. An exemplary portion 610 is shown in panel (d). Portion 610 may be created by trimming the top and bottom off the image 608, as indicated by the dotted lines in panel (d) so that only the portion 610 remains in the second video feed. As can be seen in this example the width of frame 610 is the same as the height of the frame 604. This maximises the size and resolution of the frame 610 while converting the video feed to a second video feed having a landscape orientation. Whilst this results in a lower maximum resolution image, the resolution of modern imaging sensors in portable devices may still allow recording of acceptably high quality videos for most end uses. While it will vary depending on the exact size of a camera's senor(s), a camera with a sensor capable of capturing 4K video in landscape orientation will typically be capable of generating a second video feed of the type described above, that meets or exceeds 1080p (or 2K) resolution. In some forms the camera(s) are arranged to capture video in maximum resolution of HD or UHD formats. This maximum resolution will apply to the recording in landscape, and conventional portrait capture (as would be performed using the GUI 300 of Figure 3A), whereas a landscape clip generated from a portrait orientation second video feed may be able to be recorded in a format having about half the resolution. As will be appreciated the maximum width (in pixels) of a landscape clip generated from a portrait orientation second video feed will be determined by the number of pixels in the short dimension of the camera(s) capturing the images. The height of the second video feed and landscape clip (counted in pixels) can be determine by reference to a desired video format or aspect ratio.

Generally speaking any landscape shaped portion of the image generated by the camera(s) may be used as frames in the second video feed, but in some embodiments the selected portion (e.g., image 610) of the image generated by the camera(s) and used in the second video feed, may be defined by the camera control software as a band of the across the middle of the portrait orientated frame captured by the camera(s) (e.g., a band across the middle of frame 608). An example of which is illustrated in Figure 6, panel (d). Such a band may be defined by a distance (e.g., number of lines of pixels) above and below the middle line of the portrait orientated frame.

In addition to displaying the second video feed on the landscape viewing window 402P, when a user provides an input to record a video (e.g., by touching button 404 on user interface 400P) the device 1000 is configured to begin recording. In response to said user input the device 1000 saves a landscape video into memory that corresponds to the second video feed. That is, rather than saving the entire portrait orientation video feed (i.e., frames equivalent to frame 608), only the portion of the captured frames corresponding to the second video feed are stored (i.e., frames equivalent of frame portion 610). The landscape video may be stored at any desired resolution, such as, at the resolution of the second video feed; or at the full resolution captured by the camera's at least one image sensor, or at some user selected resolution different to the second video feed. A second user input on the button 404 may cause recording to stop.

Other embodiments may store the full frame video in portrait orientation with data (e.g., stored as metadata in the video file) specifying the portion of the frames that comprise or correspond to the second video feed that was shown in the viewing window 402P.

In some embodiments the device may be programmed to generate a proxy corresponding to a saved video file. The proxy is typically a working copy of the captured footage with different parameters than the original video file, e.g., a lower resolution, higher compression, different encoding, lower quality, smaller file size.

Embodiments in which only a file representing the landscape version of the second video feed is stored, the creation of the proxy is simplified as the file size of the original stored file will typically be smaller than a full frame video, so the generation of the proxy will be less resource intensive. Moreover there is no need to separately encode or save data specifying the portion of the frames that comprise or correspond to the second video feed.

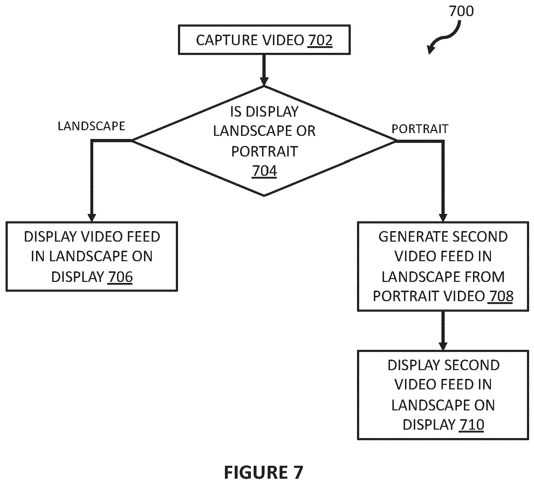

Figure 7 shows a flowchart of an overview of a method for operating a portable device to capture a video according to an embodiment. The method 700 begins by capturing a series of images comprising a video 702. The portable device determines at 704 whether the device or its display is in landscape or portrait orientation. Despite the flowchart 700 showing the steps 702 and 704 as sequential, the order of the steps is not important. In fact both may take place continuously while the camera is active and effectively simultaneously. If the device or its display are in landscape mode a video feed that is also in landscape mode is displayed on the graphical user interface of the device at 706. If the device or its display are in portrait mode a second video feed that is also in landscape mode is generated in 708 and displayed in the graphical user interface of the device at 710.

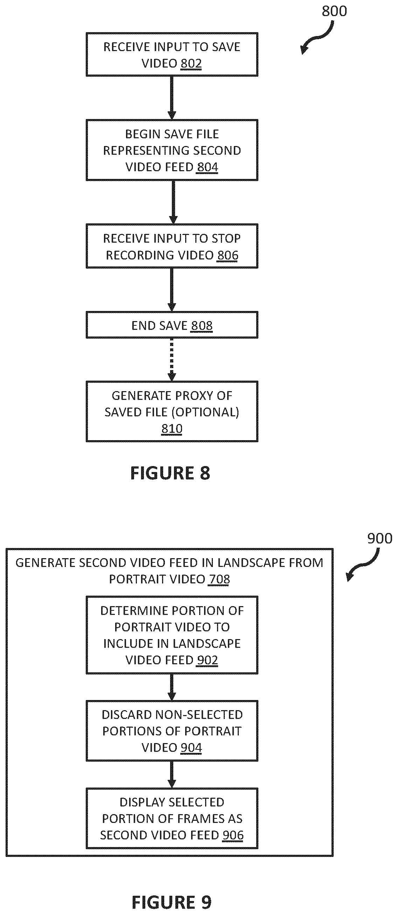

Figure 8 shows a flowchart of an overview of a method for a portable device to save a video file according to an embodiment of the present disclosure. The process 800 begins by receiving a user input to record a video 802, e.g., by sensing a user touching the device's touch screen to press the capture button on the portable device's GUI. The device starts, at 804, saving a video file comprising a second video feed which only includes a portion of frames captured by the device's camera(s). The portion in the second video feed being a landscape orientation portion selected from the portrait orientation images captured by the camera(s). When the device receives a user input to stop recording, at 806, e.g., by again sensing a user touching the device's touch screen to press the capture button on the portable device's GUI, the file save process is concluded 808, e.g., by saving appropriate end of file data. In some embodiments the device may also generate a proxy of the saved file 810. This may be performed after the conclusion of the file save in 808, or be begun while the file saving is underway e.g., beginning after step 804 and running in parallel with the file saving process. It should be noted that until the user provides the input to save the video at 802, the second video feed may be generated at a reduced resolution or frame rate, but receipt of an instruction to record a video can also trigger the device to begin generating and storing the second video feed at the desired resolution or frame rate for storage. While not recording there may not be any requirement for the full video processing to take place, which may reduce the necessary processing resources and thereby save battery power.

Figure 9 shows a flowchart of one example of a method 900 to generate the second video feed from the captured portrait video in step 708 of Figure 7. In step 902 the portion of the portrait video to be included in the landscape video feed is determined. This may be fixed according to rules, or user selection. In one form a fixed number of line video from above and below the middle of the portrait frames are included in the determined portion. The number of lines may be determined based on the aspect ratio or a desired video format of the video file to be saved. The aspect ratio may be chosen to match an industry standard or commonly used aspect ratio.

The non-selected parts of the portrait video are discarded without saving at 904. And the selected portion of the frames to be displayed in the second video feed are displayed in landscape in the display of the device 1000. It should be noted that the GUI may not show a full resolution of the second video feed or not show it at full frame rate, but the full second video feed will be created for storage when the record action is triggered as illustrated in Figure 8.

Any definitions expressly provided herein for terms contained in the appended claims shall govern the meaning of those terms as used in the claims. No limitation, element, property, feature, advantage or attribute that is not expressly recited in a claim should limit the scope of the claim in any way.

As used herein the terms "include" and "comprise" (and variations of those terms, such as "including", "includes", "comprising", "comprises", "comprised" and the like) are intended to be inclusive and are not intended to exclude further features, components, integers or steps.

For aspects of the disclosure that have been described using flowcharts, a given flowchart step could potentially be performed in various ways and by various devices, systems or system modules. A given flowchart step could be divided into multiple steps and/or multiple flowchart steps could be combined into a single step, unless the contrary is specifically noted as essential. Furthermore, the order of the steps can be changed without departing from the scope of the present disclosure, unless the contrary is specifically noted as essential.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A portable computing device comprising:
a display on a first side of the portable computing device, the display having a long dimension and a short dimension;
at least one camera with a field of view facing backward from the back face of the camera, the at least one camera having at least one image sensor arranged to capture video with substantially rectangular video frames having a second long dimension and a second short dimension; wherein the at least one camera and the display share a common orientation, such that the first long dimension and second long dimension are aligned;
one or more processors;
a memory; and
one or more programs, wherein the one or more programs are stored in the memory and configured to be executed by the one or more processors, cause the portable computing device to:
display a first video feed from the at least one camera on the display in landscape orientation when said at least one camera and display are in landscape orientation,
display a second video feed from the at least one camera on the display in landscape orientation, when said at least one camera and display are in portrait orientation.

2. The portable computing device as claimed in claim 1 wherein displaying a second video feed from the at least one camera on the display in landscape orientation when said at least one camera and display are in portrait orientation comprises:
capturing video in portrait orientation;
displaying a portion of the captured video in a viewing window of a graphical user interface, said viewing window being in landscape orientation when said display is in portrait orientation, to display said second video feed from the at least one camera on the display in landscape orientation.

3. The portable computing device as claimed in claim 2 wherein, the portable computing device has a third long dimension and a third short dimension when the portable computing device is viewed from a direction normal to the display, wherein the third long dimension is aligned with the first and second long dimensions; or
the viewing window of the graphical user interface has a fourth long dimension and a fourth short dimension, wherein the fourth long dimension of the viewing window is aligned with the second short dimension.

4. The portable computing device as claimed in claim 3, wherein the portion of the captured video that is displayed in the viewing window as the second video feed includes at least one of:
substantially the whole extent of the frames of the captured video across the second short dimension; and
part of the frames of the captured video along the second long dimension.

5. The portable computing device of any one of the preceding claims, wherein the portable computing device is configured to:
capture portrait orientation video when the camera is in portrait orientation; and
discard an unviewed portion of the captured portrait orientation video that is not included in the second video feed.

6. The portable computing device as claimed in any one of the preceding claims, wherein a landscape video is saved into memory corresponding to the second video feed and the landscape video is stored:
at a resolution of the second video feed; or
at a user selected resolution different to the resolution of the second video feed; or
at a full resolution captured by the at least one camera's at least one image sensor; or
with a proxy of said landscape video.

7. The portable computing device as claimed in any one of the preceding claims wherein the device is a smartphone.

8. A method performed by a portable computing device, comprising:
displaying a first video feed from at least one camera of the portable computing device in landscape orientation on a display of the portable computing device when said at least one camera and display are in landscape orientation,
displaying a second video feed from said at least one camera on the display in landscape orientation, when said at least one camera and display are in portrait orientation.

9. The method as claimed in claim 8, wherein displaying the second video feed from the at least one camera on the display in landscape orientation, when said at least one camera and display are in portrait orientation comprises:
capturing video in portrait orientation;
displaying a portion of the captured video in a viewing window of a graphical user interface, said viewing window being in landscape orientation when said display is in portrait orientation, to display said second video feed from the camera on the display in landscape orientation.

10. The method of either one of claims 8 or 9, further comprising, determining whether said display is in landscape or portrait orientation.

11. The method as claimed in any one of claims 8 to 10, wherein the method further comprises:
capturing portrait orientation video when the camera is in portrait orientation; and
discarding an unviewed portion of the captured video that is not included in the second video feed.

12. The method as claimed in any one of claims 8 to 11 which further comprises:
receiving a user input to record a video; and, in response to said user input; saving a landscape video into memory corresponding to the second video feed, when said at least one camera and display are in portrait orientation.

13. A graphical user interface for a portable computing device, the graphical user interface operating in:
a first mode wherein the graphical user interface is configured to display a first video feed from at least one camera of the portable computing device in a viewing window on the display, in landscape orientation, when said at least one camera and display are in landscape orientation; and
in a second mode wherein the graphical user interface is configured to display a second video feed from the at least one camera of the portable computing device in a viewing window on the display in landscape orientation, when said at least one camera and display are in portrait orientation.

14. A non-transitory computer readable storage medium storing one or more programs, the one or more programs comprising instructions, which, when executed by a portable electronic device with a display and one or more cameras, cause the electronic device to perform the method according to any one of claims 8 to 12.

15. A method performed by a portable computing device comprising a display, the method comprising:
capturing, by at least one camera of the portable computing device, a video;
in accordance with a determination that said portable computing device or the display is in a landscape orientation, displaying a first video feed from the captured video in landscape orientation on a graphical user interface of the device; and
in accordance with a determination that said portable computing device or the display is in a portrait orientation, generating a second video feed in landscape orientation from the captured video.
